Europäisches Patentamt

European Patent Office

Office européen des brevets

(19)

(11) Veröffentlichungsnummer : **0 132 491**
**B1**

(12)                    EUROPÄISCHE PATENTSCHRIFT

(45) Veröffentlichungstag der Patentschrift :
02.12.87

(51) Int. Cl.⁴ : **F 16 H 25/22**

(21) Anmeldenummer : **84101706.4**

(22) Anmeldetag : **18.02.84**

(54) **Kugelumlauf-Schraubgetriebe.**

(30) Priorität : 29.06.83 DE 3323347

(43) Veröffentlichungstag der Anmeldung :
13.02.85 Patentblatt 85/07

(45) Bekanntmachung des Hinweises auf die Patenterteilung : 02.12.87 Patentblatt 87/49

(84) Benannte Vertragsstaaten :
**AT BE CH FR GB IT LI LU NL SE**

(56) Entgegenhaltungen :
**DE-U- 8 236 312**

(73) Patentinhaber : **Neff Gewindespindeln GmbH**
**Alfred-Ritter-Strasse 47**
**D-7035 Waldenbuch (DE)**

(72) Erfinder : **Neff, Karl**
**Schillerstrasse 10**
**D-7035 Waldenbuch (DE)**

(74) Vertreter : **Rüger, Rudolf, Dr.-Ing. et al**
**Webergasse 3 Postfach 348**
**D-7300 Esslingen/Neckar (DE)**

EP 0 132 491 B1

**Beschreibung**

Die Erfindung betrifft ein Kugelumlauf-Schraubgetriebe gemäß dem Oberbegriff des Patentanspruchs 1.

Bei einem aus der DE-U-8236 312 bekannten Kugelumlauf-Schraubgetriebe mit diesen Merkmalen ist die nach Art eines Gewinderinges ausgebildete Mutter mit einem axial und radial durchgehenden Schlitz versehen, in den ein den Rückleitungskanal und eine radial nach außen gerichtete Einfüllöffnung für die Kugel aufweisendes Übergangsstück eingesetzt ist. An dieses aus Kunststoffmaterial bestehende Übergangsstück sind beiderseits des Schraubenganges der Mutter verlaufende, die Kugeln gegen Herausfallen sichernde Halteringe angeformt, die im Querschnitt derart gestaltet sind, daß sie mit einem etwa lippenförmigen Halterungsteil an den Kugeln angreifen. Die Halterungsringe liegen in zu der Schraubennut hin offenen, rinnenförmigen Vertiefungen der Mutter, die jeweils einen Bord bilden, gegen den der zugeordnete Haltering in einer Richtung axial abgestützt ist. Das Übergangsstück und die beiden angeformten Halteringe sind ein einheitliches, einstückiges Gebilde, das vor dem Einfüllen der Kugeln in die Mutter eingefügt und in den Schlitz bzw. die Vertiefungen eingeschnappt wird, wobei das Übergangsstück die Halterung der Halteringe in der Mutter bewirkt. Durch die Halteringe werden dabei die Kugeln am Herausfallen aus der Schraubennut der Mutter, insbesondere bei der Montage, gehindert. Aufgabe der Erfindung ist es deshalb, ein Kugelumlauf-Schraubgetriebe zu schaffen, bei dem mit einfachen Mitteln ein unbeabsichtigtes Herausfallen der Kugeln aus der zugehörigen Schraubennut der Mutter bei von der Spindel abgeschraubter Mutter verhindert ist.

Zur Lösung dieser Aufgabe weist das eingangs genannte Kugelumlauf-Schraubgetriebe erfindungsgemäß die Merkmale des kennzeichnenden Teiles des Patentanspruchs 1 auf.

Das aus Kunststoffmaterial bestehende elastische Band kann unabhängig von der Ausbildung des Kugelrückleitungskanales hergestellt und einfach montiert werden. Mit seinem an dem stegartigen Halteteil angeformten lippenförmigen Halterungsteil greift es an den Kugeln oberhalb deren Mitten an. Das lippenförmige Halterungsteil, das sich über die Länge des Bandes erstreckt und im Querschnitt im wesentlichen keilförmig ist, übt nur eine verhältnismäßig kleine Reibungskraft auf die Kugeln aus ; es übergreift die Kugeln teilweise und hält sie damit sicher in der zugeordneten Schraubennut zurück.

Das elastische Band ist mit seinem Halteteil in die entsprechende Nut der Mutter eingefügt und damit über seine gesamte Länge in der Mutter einwandfrei gehalten. In der Regel genügt es, daß die Nut parallelflankig begrenzt ist, so daß das Band mit seinem Halteteil einfach eingedrückt werden kann. Es sind aber auch Ausführungsformen denkbar, bei denen die Nut als Profilnut ausgebildet ist. Da das Band aus einem elastischen Material besteht, kann es auch in diesem Fall in der Regel einfach in die Nut eingedrückt werden.

Ist ein solches Band auf der Außenseite des vorne liegenden Kugelumlaufkanales vorgesehen, so dient es gleichzeitig dazu, daß der zwischen der Mutter und der Spindel bestehende Ringspalt nach außen hin auf dieser Seite durch das Band abgedichtet ist.

Weist das Kugelumlauf-Schraubgetriebe zur Erzielung der notwendigen Tragzahl mehrere Kugelumlaufkanäle auf, so ist die Anordnung mit Vorzug derart getroffen, daß das Band zwischen zwei benachbarten Schraubengängen der Mutter angeordnet und mit zwei die Kugeln der beiden Schraubengänge halternden Halteteilen ausgebildet ist. Dabei können dann die beiden lippenförmigen Halterungsteile an einem gemeinsamen Halteteil angeformt sein, das seinerseits, wie bereits erläutert, in eine entsprechende Nut der Mutter eingefügt ist.

Das Band erstreckt sich in der Regel über den gesamten Umfang der die Schraubennut enthaltenden Bohrung der Mutter. Es kann im Bereiche des Rückleitungskanales unterbrochen sein, oder aber die Anordnung kann derart getroffen sein, daß der Rückleitungskanal über das hier durchgehende Band hinweggeleitet ist.

Zur Vereinfachung der Herstellung des Kugelumlauf-Schraubgetriebes können die Schraubennuten der Mutter durch wenigstens einen entsprechend einem Schraubengang gebogenen, im Querschnitt im wesentlichen rinnenförmigen Profilring gebildet sein, der in einem ihn umgebenden Mutterkörper angeordnet ist. Dabei ist es dann zweckmäßig, wenn die Nut bzw. die Nuten zur Aufnahme des Halteteiles des Bandes durch den Profilring oder die Profilringe begrenzt ist bzw. sind.

In der Zeichnung sind Ausführungsbeispiele des Gegenstandes der Erfindung dargestellt. Es zeigen :

Fig. 1 ein Kugelumlauf-Schraubgetriebe in perspektivischer Darstellung,

Fig. 2 die Mutter des Kugelumlauf-Schraubgetriebes nach Fig. 1, teilweise im axialen Schnitt, in einer Seitenansicht, im Ausschnitt und in einem anderen Maßstab,

Fig. 3 die Mutter nach Fig. 2, geschnitten längs der Linie III-III der Fig. 2 in einer Seitenansicht und im Ausschnitt,

Fig. 4 das Kugelumlauf-Schraubgetriebe nach Fig. 1, geschnitten längs der Linie IV-IV der Fig. 1, in einer Seitenansicht, im Ausschnitt und in einem anderen Maßstab,

Fig. 5 ein Kugelumlauf-Schraubgetriebe gemäß der Erfindung in einer abgeänderten Ausführungsform und in einer stirnseitigen Ansicht und

Fig. 6 das Kugelumlauf-Schraubgetriebe nach Fig. 5, geschnitten längs der Linie VI-VI der Fig. 5, in einer Seitenansicht, im Ausschnitt und in einem anderen Maßstab.

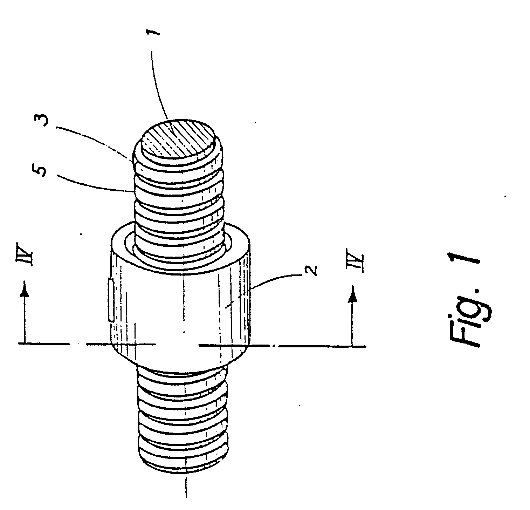

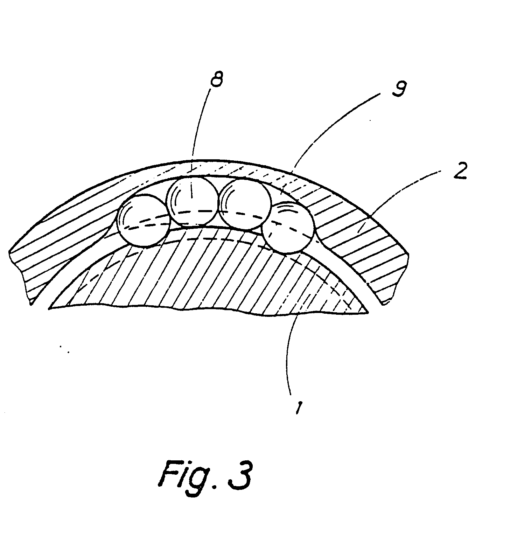

Das in den Fig. 1 bis 3 dargestellte Kugelumlauf-Schraubgetriebe weist eine Spindel 1 und eine Mutter 2 auf, die jeweils mit umlaufenden, im Querschnitt im wesentlichen teilkreisförmigen Schraubennuten 3 bzw. 4 ausgebildet sind. Zwischen den einzelnen Schraubengängen der in die Umfangsfläche der zylindrischen Spindel 1 eingearbeiteten Schraubennut 3 verlaufen ebenfalls schraubenförmige Stege 5, denen Stege 6 entsprechen, die zwischen den Schraubengängen der in der zylindrischen Bohrung 7 der Mutter 2 angeordneten Schraubennut(en) 4 entsprechen.

Die Mutter 2 enthält mindestens drei nebeneinanderliegende geschlossene Kugelumlaufkanäle, in denen jeweils Kugeln 8 angeordnet sind. Die Kugeln 8 werden von einem Endabschnitt eines Schraubenganges des jeweiligen Kugelumlaufkanales zu dem anderen Endabschnitt dieses Schraubenganges durch einen Rückleitungskanal 9 geleitet, der in der Mutter 2 oder in einem in eine entsprechende Bohrung oder Ausnehmung derselben eingesetzten Rückleitungskörper ausgebildet ist.

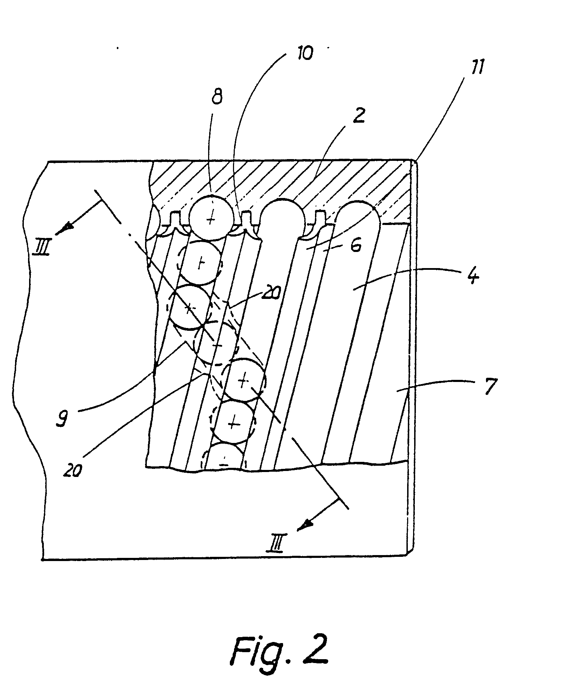

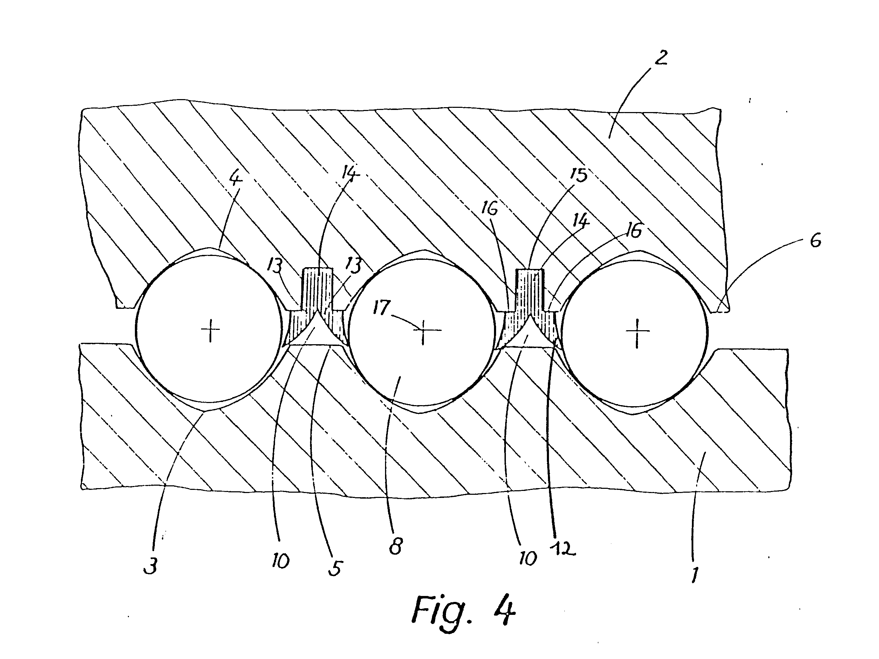

Seitlich neben der einen Kugelumlaufkanal begrenzenden Schraubennut 4 ist auf dem zugehörigen schraubenförmigen Steg 6 der Mutter 2 ein biegsames Band 10 bzw. 11 (Fig. 2, 4) angeordnet, das aus einem Kunststoffmaterial besteht und die Kugeln 8 des Kugelumlaufkanales zumindest über einen Teil der Länge der Schraubennut 4 der Mutter unverlierbar in dem Kugelumlaufkanal hält.

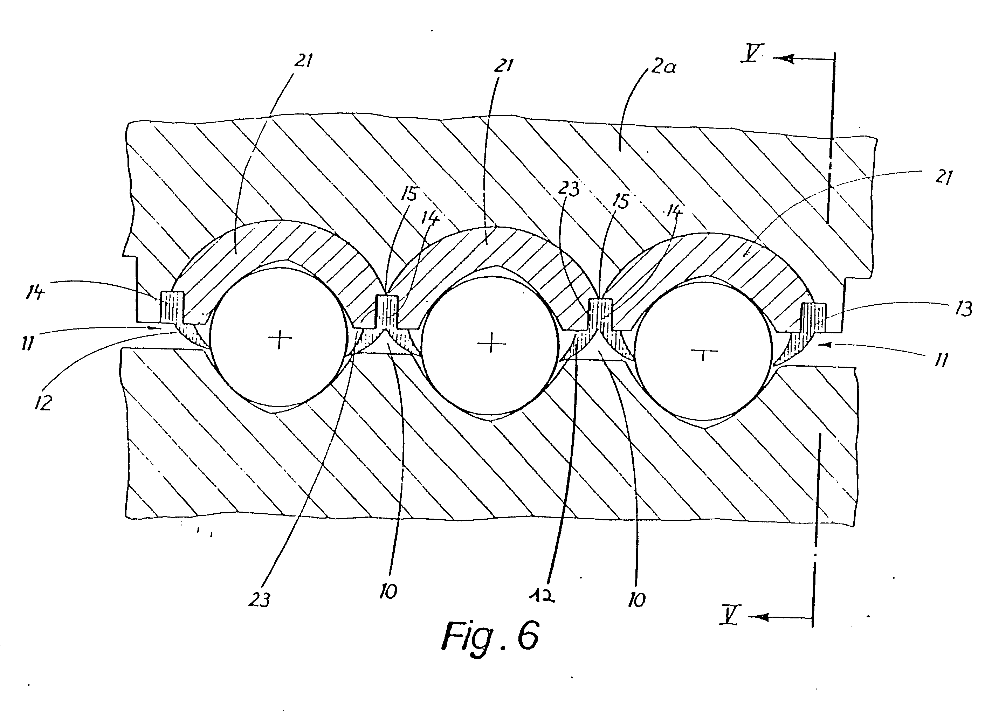

Zu diesem Zwecke weist das in seinem Querschnitt in den Einzelheiten insbesondere in den Fig. 4, 6 dargestellte biegsame Band 10 bzw. 11 wenigstens ein über die Länge des Bandes durchgehendes lippenförmiges Halterungsteil 12 auf, dessen Querschnittsgestalt im wesentlichen keilförmig ist. Das Halterungsteil 12 ist an einer Wurzel 13 mit einem ebenfalls über die Länge des Bandes durchgehenden stegartigen Halteteil 14 einstückig verbunden, das bei der dargestellten Ausführungsform eine im wesentlichen rechteckige Querschnittsgestalt aufweist.

Zwischen zwei benachbarten Schraubengängen der Mutter 2 ist in der aus den Fig. 2 und 4 ersichtlichen Weise jeweils das Band 10 angeordnet, das mit zwei lippenförmigen Halterungsteilen 12 ausgebildet ist, die jeweils über ihre Wurzel 13 mit dem gemeinsamen Halteteil 14 einstückig verbunden sind. Die neben den beiden außen liegenden Kugelumlaufbahnen angeordneten biegsamen Bänder 11 sind in der aus Fig. 6 zu ersehenden Weise jeweils lediglich mit einem lippenförmigen Halterungsteil 12 versehen, doch ist es grundsätzlich auch möglich, an dieser Stelle das biegsame Band 10 einfach durchgehen zu lassen.

Das biegsame Band 10 bzw. 11 ist mit seinem Halteteil 14 in eine in dem schraubenförmigen Steg 6 der Mutter 2 zwischen zwei benachbarten Schraubengängen mittig angeordneten schraubenförmigen Nut 15 gehalten, wobei es auf dem Steg 6 jeweils mit wenigstens einer Schulter 16 aufliegt, d. h. das Band ist axial gegen die Nut abgestützt. Die schraubenförmige Nut 15 ist hier parallelflankig ausgebildet ; in einer alternativen Ausführungsform könnte sie auch eine andere, beispielsweise schwalbenschwanz- oder teilkreisförmige Querschnittsgestalt aufweisen, so daß das entsprechend gestaltete Halteteil 14 formschlüssig gehaltert ist.

Das biegsame Band 10 bzw. 11 ragt mit der Randkante seines lippenförmigen Halterungsteiles 12 über die Mitten 17 der Kugeln 8, wobei es sich etwa bis zur Höhe der schraubenförmigen Stege 5 der Spindel 1 erstreckt und liegt mit leichter elastischer Kraft an den Kugeln 8 an, wobei sich eine im wesentlichen lediglich linienförmige Berührung ergibt.

Die Kugeln 8 sind damit durch das biegsame Band 10 bzw. 11 unverlierbar in der Schraubennut 4 der Mutter 2 gehaltert, so daß diese von der Spindel 1 abgeschraubt werden kann, ohne daß die Kugeln 8 herausfallen.

Das biegsame Band 10 kann, wie bereits früher erwähnt, durchgehend über die gesamte axiale Länge der Mutter 2 in die in den schraubenförmigen Steg 6 eingearbeitete Nut 15 in der beschriebenen Weise eingesetzt sein. Dann muß die Anordnung im Bereiche der Rückleitungskanäle 9, wie in Fig. 2 dargestellt, gestaltet sein, d. h. jeder Rückleitungskanal 9 muß die Kugeln 8 in der Mutter 2 über das von ihm überquerte Band 10 und die zugehörige Nut 15 in einem radial außenliegenden Bereich hinwegleiten.

Alternativ kann die Anordnung aber auch derart getroffen sein, daß das biegsame Band in dem Bereich des jeweiligen Rückleitungskanales 9 unterbrochen ist, wie dies in Fig. 2 bei 20 angedeutet ist. In diesem Falle kann außen das einlippige Band 11 verwendet werden.

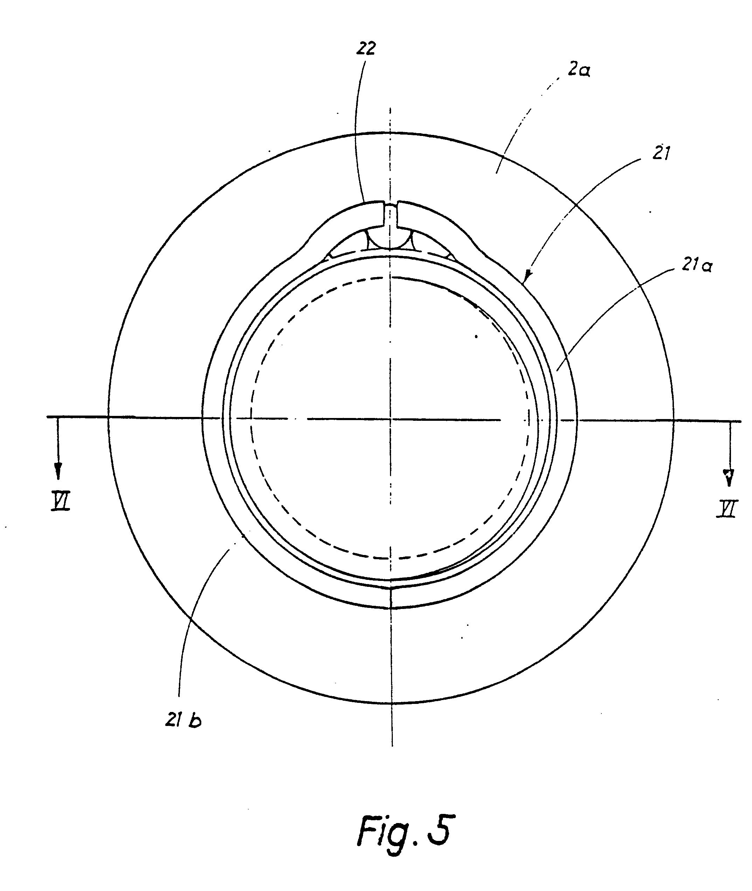

Während bei dem im Vorstehenden anhand der Fig. 1 bis 4 erläuterten Kugelumlauf-Schraubgetriebe die Schraubennuten 4 unmittelbar in das entsprechend ausgewählte härtbare Material der Mutter 2 eingearbeitet sind — was einen erheblichen Herstellungsaufwand bedingt — sind bei der Ausführungsform nach den Fig. 5, 6 die Schraubennuten 4 der Mutter durch drei, jeweils entsprechend einem Schraubengang gebogene, im Querschnitt im wesentlichen rinnenförmige Profilringe 21 begrenzt, die in einen sie umgebenden Mutterkörper 2a, der auch aus Kunststoffmaterial bestehen kann, eingegossen oder eingespritzt sind. Jeder der Profilringe 21 besteht aus zwei symmetrischen Ringteilen 21a, 21b, die jeweils aus einem entsprechenden Stahlblechteil mit hoher Präzision geprägt und gebogen sind. Die beiden Ringteile 21a, 21b sind durch den Mutterkörper 2a in ihrer gegenseitigen Lage exakt fixiert.

Jeder Profilring 21 ist mit einem angeformten, den Rückleitungskanal 9 bildenden kurzen Abschnitt 22 versehen, der entsprechend dem Rückleitungskanal nach Fig. 2 querverlaufend angeordnet ist.

Bei dieser Ausführungsform sind die zur Aufnahme des Halteteiles 14 des biegsamen Bandes 10 bzw. 11 dienenden schraubenförmigen Nuten 15 jeweils durch entsprechende randseitige, ringförmige Vertiefungen 23 der Profilringe 21 begrenzt.

Im übrigen entspricht diese Anordnung der anhand der Fig. 1 bis 4 beschriebenen Ausführungsform, wobei gleiche Bezugszeichen gleiche Teile beschreiben.

**Patentansprüche**

1. Kugelumlauf-Schraubgetriebe, dessen Spindel (1) und Mutter (2) jeweils mit im Querschnitt im wesentlichen teilkreisförmigen Schraubennuten (3, 4) ausgebildet sind, die wenigstens einen die Kugeln (8) enthaltenden Kugelumlaufkanal begrenzen, wobei die Mutter wenigstens einen die Kugeln von einem Endabschnitt eines Schraubenganges des Kugelumlaufkanales zu dem anderen Endabschnitt dieses Schraubenganges leitenden Rückleitungskanal (9) aufweist und in der Mutter seitlich neben der den Kugelumlaufkanal begrenzenden Schraubennut (4) wenigstens ein aus Kunststoffmaterial bestehendes elastisches Halteelement angeordnet und axial gegen eine Fläche einer Vertiefung abgestützt ist, das einen die Kugeln des Kugelumlaufkanales zumindest über einen Teil der Länge der Schraubennut der Mutter in deren Schraubennut unverlierbar haltenden, angeformten, lippenförmigen Halterungsteil (12) aufweist, dadurch gekennzeichnet, daß das Halteelement ein elastisches Band (10, 11) ist, das mit einem stegartigen Halteteil (14) in eine entsprechende Nut (15) der Mutter (2) eingefügt und in dieser formschlüssig gehalten ist.

2. Kugelumlauf-Schraubgetriebe nach Anspruch 1, dadurch gekennzeichnet, daß der zwischen der Mutter (2) und der Spindel (1) bestehende Ringspalt nach außen hin auf zumindest einer Seite durch das Band (11) abgedichtet ist.

3. Kugelumlauf-Schraubgetriebe nach einem der vorhergehenden Ansprüche, dadurch gekennzeichnet, daß das Band (10) zwischen zwei benachbarten Schraubengängen der Mutter (2) angeordnet und mit zwei die Kugeln (8) der beiden Schraubengänge halternden Halterungsteilen (12) ausgebildet ist.

4. Kugelumlauf-Schraubgetriebe nach den Ansprüchen 1 und 3, dadurch gekennzeichnet, daß die beiden lippenförmigen Halterungsteile (12) an einem gemeinsamen Halteteil (14) angeformt sind.

5. Kugelumlauf-Schraubgetriebe nach einem der vorhergehenden Ansprüche, dadurch gekennzeichnet, daß sich das Band über den gesamten Umfang der die Schraubennut (4) enthaltenden Bohrung (7) der Mutter (2) erstreckt.

6. Kugelumlauf-Schraubgetriebe nach einem der vorhergehenden Ansprüche, dadurch gekennzeichnet, daß die Schraubennuten (4) der Mutter (2) durch wenigstens einen entsprechend einem Schraubengang gebogenen, im Querschnitt im wesentlichen rinnenförmigen Profilring (21) gebildet sind, der in einem ihn umgebenden Mutterkörper (2a) angeordnet ist und daß die Nut(en) (15) zur Aufnahme des Halteteiles (14) des Bandes (10, 11) durch den Profilring (21) oder die Profilringe (21) begrenzt ist bzw. sind.

**Claims**

1. A ballscrew whose spindle (1) and nut (2) are each formed with helical grooves (3, 4) substantially part-circular in cross-section which bound at least one ball race containing the balls (8) ; the nut has at least one return channel (9) contacting the balls from one end portion of a screw thread of the ball race to the other end portion of such screw thread ; and disposed in the nut laterally alongside the helical groove (4) bounding the ball race is at least one resilient plastics holding element which bears axially against a surface of a depression and has a moulded-on, lip-shaped retaining member (12) which retains the balls of the ball race captive in the helical groove of the nut, at least over a portion of the length thereof, characterized in that the holding element is a resilient band (10, 11) which is introduced via a web-like holding member (14) into a matching groove (15) in the nut (2) and is positively retained therein.

2. A ballscrew according to Claim 1, characterized in that the annular gap between the nut (2) and the spindle (1) is sealed off in the outward direction by the band (11) on at least one side.

3. A ballscrew according to one of the preceding Claims, characterized in that the band (10) is disposed between two adjacent screw threads of the nut (2) and is constructed with two retaining members (12) which retain the balls (8) of the two screw threads.

4. A ballscrew according to Claims 1 and 3, characterized in that the two lip-shaped retaining members (12) are moulded on a common holding member (14).

5. A ballscrew according to one of the preceding Claims, characterized in that the band extends over the whole periphery of the bore (7) in the nut (2) which is formed with the helical groove (4).

6. A ballscrew according to one of the preceding Claims, characterized in that the helical grooves (4) of the nut (2) are formed by at least one sectional ring (21), which is substantially channel-shaped in cross-section, is bent to match a screw thread, and is disposed in an enclosing nut member (2a), the or each groove (15) being bounded by the or each sectional ring (21) to receive the holding member (14) of the band (10, 11).

**Revendications**

1. Mécanisme à vis à billes dont la tige (1) et l'écrou (2) sont respectivement munis de rainures hélicoïdales (3, 4), de section transversale sensiblement en forme de cercle partiel, qui délimitent au moins un canal de recirculation contenant les billes (8), l'écrou comportant au moins un canal de retour (9) conduisant les billes d'une section d'extrémité d'une spire du canal de recirculation à l'autre section d'extrémité de cette spire, et dans l'écrou, latéralement à côté de la rainure hélicoïdale (4) délimitant le canal de recirculation de billes, étant disposé au moins un élément de fixation élastique qui, réalisé en matériau synthétique et prenant appui axialement contre une surface d'un évidement, comporte un organe de retenue (12), en forme de lèvre et façonné d'une seule pièce, qui retient sans possibilité de s'échapper les billes du canal de retour dans la rainure hélicoïdale de l'écrou au moins sur une partie de la longueur de celle-ci, caractérisé par le fait que l'organe de retenue est une bande élastique (10, 11) qui est insérée par un élément de fixation (14) en forme de nervure dans une gorge correspondante (15) de l'écrou (2) où elle est assujettie par une liaison par emboîtement.

2. Mécanisme à vis à billes selon la revendication 1, caractérisé par le fait que la fente annulaire comprise entre l'écrou (2) et la tige (1) est étanchée vers l'extérieur sur au moins un côté par la bande (11).

3. Mécanisme à vis à billes selon l'une des revendications précédentes, caractérisé par le fait que la bande (10) est placée entre deux spires voisines de l'écrou (2) et comporte deux organes de retenue (12) emprisonnant les billes (8) des deux spires.

4. Mécanisme à vis à billes selon les revendications 1 et 3, caractérisé par le fait que les deux organes de retenue (12) en forme de lèvres sont façonnés d'une seule pièce sur un élément de fixation commun (14).

5. Mécanisme à vis à billes selon l'une des revendications précédentes, caractérisé par le fait que la bande s'étend sur toute la périphérie de l'alésage (7), comportant la rainure hélicoïdale (4), de l'écrou (2).

6. Mécanisme à vis à billes selon l'une des revendications précédentes, caractérisé par le fait que les rainures hélicoïdales (4) de l'écrou (2) sont formées par au moins un anneau profilé (21), de section transversale sensiblement en forme de goulotte et de courbure correspondant à une spire, qui est disposé dans un écrou (2a) l'entourant, et que la ou les gorge(s) (15), destinée(s) à recevoir l'élément de fixation (14) de la bande (10, 11) est/ou sont délimitée(s) par l'anneau profilé (21) ou les anneaux profilés (21).

*Fig. 1*

*Fig. 2*

*Fig. 3*

Fig. 4

0 132 491

Fig.5

Fig. 6

0 132 491